# EUROPÄISCHE PATENTANMELDUNG

(11) **EP 2 562 482 A2**
(43) Veröffentlichungstag der Anmeldung: **27.02.2013**
(21) Anmeldenummer: 12180514.7
(22) Anmeldetag: 15.08.2012
(51) Int. Cl.: F24C 15/20, B01D 46/00

(54) **Filterelement und Dunstabzugsvorrichtung**

(30) Priorität: 22.08.2011 DE 102011081302
(71) Anmelder: BSH Bosch und Siemens Hausgeräte GmbH, 81739 München (DE)
(72) Erfinder: Eich, Holger, 76287 Rheinstetten (DE); Metz, Daniel, 76689 Karlsdorf-Neuthard (DE); Schnatz, Martina, 75015 Bretten (DE)

(57) **Zusammenfassung**

Die Erfindung betrifft ein Filterelement für eine Dunstabzugsvorrichtung (1), insbesondere eine Dunstabzugsvorrichtung (1) mit einer Dunstabzugshaube (11), wobei das Filterelement (12) Filtermaterial zur Aufnahme von Substanzen aus einem das Filterelement (12) anströmenden Luftstrom aufweist. Das Filterelement (12) ist dadurch gekennzeichnet, dass das Filtermaterial teilweise aus zumindest einem mineralischen Adsorber besteht, der zumindest teilweise aus einem Schichtsilikat besteht, und das Filtermaterial weiterhin Aktivkohle umfasst. Weiterhin wird eine Dunstabzugsvorrichtung (1) mit einem solchen Filterelement (12) beschrieben.

## Beschreibung

Die vorliegende Erfindung betrifft ein Filterelement und eine Dunstabzugsvorrichtung, insbesondere eine Dunstabzugsvorrichtung, die eine Dunstabzugshaube umfasst.

Dunstabzugshauben sollen unter anderem Gerüche aus dem Kochwrasen beseitigen. Üblicherweise werden zu diesem Zweck Aktivkohlefilter eingesetzt. Aktivkohle ist als breitbandiges Adsorptionsmittel bekannt. Viele Gerüche und auch Wasser werden von Aktivkohlefiltern gut adsorbiert. Allerdings ist es aufgrund der Natur von Aktivkohle nicht oder nur schwer möglich einzelne Gerüche gezielt zu adsorbieren und die Adsorptionsvorgänge in dem Filterelement gezielt einzustellen.

Aufgabe der vorliegenden Erfindung ist es daher, eine Lösung zu schaffen mittels derer Gerüche und weitere Verunreinigungen aus einem Luftstrom zuverlässig und gezielt entfernt werden können.

Der Erfindung liegt die Erkenntnis zugrunde, dass zur Lösung dieser Aufgabe Filtermaterial in dem Filterelement verwendet wird, das eine Zusammensetzung aus unterschiedlichen Bestandteilen darstellt.

Die Aufgabe wird gemäß einem ersten Aspekt daher gelöst durch ein Filterelement für eine Dunstabzugsvorrichtung, insbesondere eine Dunstabzugsvorrichtung mit einer Dunstabzugshaube, wobei das Filterelement Filtermaterial zur Aufnahme von Substanzen aus einem das Filterelement anströmenden Luftstrom aufweist. Das Filterelement ist dadurch gekennzeichnet, dass das Filtermaterial teilweise aus zumindest einem mineralischen Adsorber besteht, der zumindest teilweise aus einem Schichtsilikat besteht, und das Filtermaterial weiterhin Aktivkohle umfasst.

Als Dunstabzugsvorrichtung wird erfindungsgemäß insbesondere eine Vorrichtung bezeichnet, die eine Dunstabzugshaube umfasst. Diese Art von Dunstabzugsvorrichtung dient insbesondere zur Reinigung von verunreinigter Luft, die in Küchen oberhalb eines Kochfeldes auftritt. Die verunreinigte Luft wird hierbei durch Fettfilter in der Dunstabzugshaube vorgereinigt und zumindest von Fett- und Flüssigkeitspartikeln sowie anderen Schwebstoffen befreit. Allerdings werden durch diese Fettfilter Geruchsstoffe und andere Verunreinigungen nicht oder nur bedingt ausgefiltert. Das erfindungsgemäße Filterelement stellt einen als Geruchsfilter bezeichneten Filter dar, an dem Geruchsstoffe und weitere Verunreinigungen ausgefiltert werden. Die aus dem Luftstrom auszufilternden Geruchsstoffe und weitere Verunreinigungen werden im Folgenden als Substanzen bezeichnet.

Erfindungsgemäß weist das Filterelement Filtermaterial auf, das zumindest teilweise aus zumindest einem mineralischen Adsorber besteht.

Als mineralische Adsorber werden erfindungsgemäß Materialien bezeichnet, die vorzugsweise natürlich vorkommende Materialen darstellen. Diese Adsorber können je nach Anwendung gegebenenfalls modifiziert sein. Im Gegensatz zu anderen Filtermaterialien, wie beispielsweise Aktivkohle, ist bei diesen mineralischen Adsorbern eine chemische Behandlung vor dem Einsatz als Filtermaterial nicht erforderlich. Dadurch werden die Herstellungskosten verringert. Zudem können mineralische Adsorber einfach entsorgt werden. Weiterhin wird der mineralische Adsorber bei dem erfindungsgemäßen Filterelement vorzugsweise unbehandelt eingesetzt. Als unbehandelt wird der Adsorber insbesondere dann bezeichnet, wenn in diesem keine Sorbate eingelagert sind. Bei solchen unbehandelten mineralischen Adsorbern stehen somit die in dem Adsorber vorliegenden Hohlräume und oberflächlichen Adsorptionsflächen vollständig für die Aufnahme der Substanzen aus dem Luftstrom zur Verfügung. Hierdurch kann eine besonders hohes Aufnahmevermögen des Adsorbers für Substanzen, wie Geruchsstoffe oder reaktive Spezies, aus dem Luftstrom gewährleistet werden.

Mineralische Adsorber weisen bei dem erfindungsgemäßen Filterelement aber auch zusätzliche Vorteile auf. Insbesondere können die mineralischen Adsorber zum einen katalytisch für die Adsorption von Geruchsstoffen und anderen Verunreinigungen wirken. Weiterhin sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere in oder über der Dunstabzugshaube möglich. Schließlich weisen unterschiedliche mineralische Adsorber ein unterschiedlich ausgeprägtes Adsorptionsverhalten für unterschiedliche Verunreinigungen, insbesondere Geruchsstoffe, auf.

Weiterhin besteht der mineralische Adsorber, der einen Teil des Filtermaterials des Filterelementes bildet, zumindest teilweise aus einem Schichtsilikat.

Es können hierbei Dreischicht-Silikate und/oder Zweischicht-Silikate in modifizierter oder unmodifizierter Form verwendet werden. Die Verwendung von Schichtsilikaten, die auch als Blatt- oder Phyllosilikate bezeichnet werden, ist unter anderem wegen deren hohen spezifischen Oberfläche von Vorteil, da dadurch die wirksame Fläche für die Ablagerung von Verunreinigungen aber auch gegebenenfalls für eine Reaktion mit Gasen, die in dem zu reinigenden Luftstrom enthalten sind, zur Verfügung steht. Schließlich weisen Schichtsilikate eine hohe Ionenaustauschkapazität auf. Somit weist das Adsorbermaterial zum einen eine hohe Aufnahmefähigkeit zur Bindung ungewünschte Verunreinigungen, die flüssig oder gasförmig sein können, und zu anderen eine einfache Möglichkeit der Reaktivierung oder Regeneration auf, beispielsweise durch thermische Behandlung. Schichtsilikate sind nicht brennbar, so dass diese unbedenklich sind für den Einsatz als Filtermaterial in einem Filterelement, das oberhalb und damit in der Nähe eines Kochfeldes eingesetzt wird. Schließlich kann durch die Verwendung von Schichtsilikaten auch die Standzeit des Filterelementes verlängert werden, da diese ein größeres Aufnahmevolumen für Verunreinigungen als andere Filtermaterialien, wie beispielsweise Aktivkohle, besitzen. Zudem können Schichtsilikate gegen Reaktionen zwischen Verunreinigungen und / oder reaktiver Spezies in dem Filtermaterial resistenter sein.

Erfindungsgemäß ist außer dem mindestens einen mineralischen Adsorber in dem Filterelement als Filtermaterial weiterhin Aktivkohle vorgesehen. Vorzugsweise stellt der Anteil des mineralischen Adsorbers in dem Filtermaterial den größeren Anteil dar, das heißt Aktivkohle ist nur in einer geringeren Menge als der oder die mineralischen Adsorber vorhanden. Indem in dem Filtermaterial sowohl mineralische Adsorber als auch Aktivkohle vorliegt, können unterschiedliche Eigenschaften gezielt eingestellt werden. Insbesondere kann das Filtermaterial entsprechend den Substanzen, wie Geruchsstoffen oder reaktiven Spezies, gewählt werden, die aus dem Luftstrom beseitigt werden sollen. Zudem können Synergieeffekte zwischen den mineralischen Adsorbern und der Aktivkohle genutzt werden.

Das erfindungsgemäße Filterelement kann entweder als sogenannter passiver Filter oder als Teil einer aktiven Luftbehandlung eingesetzt werden. Als passiver Filter wird hierbei ein Filter bezeichnet, bei dem die diesen anströmende Luft zuvor keiner Behandlung mit hohen Energien ausgesetzt wurde. Der den passiven Filter anströmende Luftstrom wird bei dieser Verwendung vorzugsweise lediglich beispielsweise durch einen Fettfilter in einer Dunstabzugshaube von Fett, Wasser und anderen Schwebeteilchen befreit und durch das Gebläse der Dunstabzugshaube beschleunigt. An dem passiven Filter setzten sich damit Substanzen, wie Geruchsstoffe, ab und können gegebenenfalls in dem Filterelement miteinander reagieren.

Bei der Verwendung des erfindungsgemäßen Filterelementes als Teil einer aktiven Luftbehandlung, kann neben der bezüglich des passiven Filters beschriebenen Funktion, das Filterelement weiterhin auch reaktive Spezies, wie Ozon, die bei der aktiven Luftbehandlung entstehen, aufnehmen. Diese reaktiven Spezies können dann miteinander oder mit weiteren in dem Filterelement abgelagerten Verunreinigungen reagieren oder lediglich in dem Filterelement gehalten werden.

In beiden Fällen wird vorzugsweise der mineralische Adsorber ohne eingebrachte Sorbate verwendet. Sorbate sind insbesondere Geruchskomponenten, wie Parfüm, die in Adsorbern vor deren Anwendung eingebracht werden, um während der Verwendung aus dem Adsorber entlassen zu werden. Solche Sorbate verringern aber das Aufnahmevermögen des Adsorbers und sind erfindungsgemäß daher vorzugsweise nicht vorgesehen. Aufgrund der erfindungsgemäß gewählten Mischung des Filtermaterials aus Aktivkohle und einem oder mehreren mineralischen Adsorbern kann der Luftstrom so zuverlässig von Geruchsstoffen befreit werden, dass das Vorsehen von Sorbaten nicht erforderlich ist und die Luft in dem Raum, in dem die Dunstabzugsvorrichtung betrieben wird, insbesondere in der Küche, dennoch keine negativen Gerüche besitzt.

Gemäß bevorzugter Ausführungsformen stellt der mineralische Adsorber smektithaltige Tonerde, Bentonit oder Halloysit dar.

Als smektithaltige Tonerde und insbesondere smektitreiche Tonerde wird ein quellfähiges Dreischichtsilikat bezeichnet. Beispielsweise werden als Smektite hierbei Montmorillonit, Beidellit und/oder Nontronit verwendet. Bentonit bezeichnet insbesondere eine Tonmineralmischung, die zum Großteil aus Montmorillonit besteht. Halloysit stellt ein Zweischichtsilikat, insbesondere Aluminiumsilikat, dar, das eine vorwiegend röhrförmige Struktur im Mikrometerbereich und kleiner aufweist und in chemischer Hinsicht dem Kaolin ähnlich ist.

Diese bevorzugten mineralischen Adsorber haben sich als besonders geeignet zum Abscheiden von Substanzen, wie Geruchsstoffen und reaktiven Spezies, und als besonders beständig gegen Zersetzung durch diese Abscheidungen oder durch Reaktionen zwischen diesen Abscheidungen erwiesen. Zudem sind diese Adsorber an das breitbandige Anwendungsspektrum von Dunstabzugshauben angepasst.

Gemäß einer Ausführungsform weist der mineralische Adsorber eine Granulatform auf. Es ist aber auch möglich mineralische Adsorber zu verwenden, die beispielsweise in Kornform vorliegen. Sind mehr als ein mineralischer Adsorber vorgesehen, so liegt es auch im Rahmen der Erfindung, dass die unterschiedlichen Adsorber in unterschiedlichen Formen vorliegen. Der Vorteil der Verwendung von Granulaten besteht zum einen darin, dass diese leicht miteinander gemischt werden können. Dadurch kann eine Mischung unterschiedlicher Adsorber erzeugt werden und so die Zusammensetzungen des Filtermaterials auf einfache Weise eingestellt werden kann. Zum anderen weisen Granulate eine große äußere Oberfläche auf, so dass die Adsorptionsfähigkeit der Adsorber effektiv genutzt werden kann.

Gemäß einer weiteren Ausführungsform umfasst das Filterelement einen Formkörper aus zumindest einem Teil des Filtermaterials, insbesondere einen Extrusionsformkörper. Der Formkörper weist vorzugsweise eine offene Form auf und kann beispielsweise eine Wabenstruktur besitzen, die insbesondere durch Extrusion einfach hergestellt werden kann. Durch eine solche offene Form des Formkörpers werden gezielte Angriffsflächen für die Adsorption gebildet. Zudem ist die Durchlässigkeit eines solchen Formkörper gegenüber der Verwendung einer Matte oder anderen durchgehenden Lage verbessert, so dass der Luftstrom nur geringfügig durch das Filterelement behindert wird. Schließlich kann durch die Verwendung eines Formkörpers aus Filtermaterial in dem Filterelement die Luftführung in dem Filterelement gezielt eingestellt werden. Der Formkörper besteht vorzugsweise zumindest teilweise aus mindestens einem der mineralischen Adsorber.

Die Aktivkohle kann bei dem erfindungsgemäßen Filterelement mit dem oder den mineralischen Adsorbern vermischt sein. Alternativ ist es aber auch möglich dass die Aktivkohle mit dem mineralische Adsorber oder den mineralischen Adsorbern versetzt ist oder der mineralische Adsorber oder die mineralischen Adsorber mit der Aktivkohle versetzt sind. Als Versetzen wird in diesem Zusammenhang insbesondere eine Verbindung verstanden, bei der die Komponenten vorzugsweise chemisch miteinander verbunden sind. Insbesondere kann beispielsweise der mineralische Adsorber mit Aktivkohle dotiert werden oder umgekehrt. Alternativ kann das Versetzen aber auch ein Beschichten der einen Komponente mit der anderen darstellen. Beispielsweise kann der mineralische Adsorber mit Aktivkohlepulver beschichtet werden. Eine solche Beschichtung kann insbesondere in den Fällen einfach ausgeführt werden, in denen der mineralische Adsorber oder die mineralischen Adsorber in Granulatform oder als Formkörper vorliegen. Auch das Beschichten eines Formkörpers aus Aktivkohle mit einem oder mehreren mineralischen Adsorbern ist erfindungsgemäß möglich.

Ein Vorteil des Versetzens der Komponenten des Filtermaterials miteinander besteht insbesondere darin, dass die konkrete Zusammensetzung des Filtermaterials an bestimmten Stellen des Filterelementes gezielt eingestellt und aufrecht erhalten werden kann. Bei einer reinen Mischung von beispielsweise Granulaten oder Körnern der Komponenten, die erfindungsgemäß auch Möglich ist, kann es beim Transport oder beim Bewegen des Filterelementes zu einer ungewollten Veränderung der Zusammensetzung an unterschiedlichen Stellen kommen. Die Synergieeffekte die durch das gemeinsame Vorsehen von Aktivkohle und mineralischen Adsorbern erzielt werden können, können dadurch gegebenenfalls stellenweise nicht mehr genutzt werden.

Erfindungsgemäß kann in dem Filterelement das Filtermaterial in Lagen angeordnet sein. Als Lage wird hierbei eine Schicht bezeichnet, die sich vorzugsweise über die gesamte Fläche des Filterelementes, die senkrecht zu der Anströmrichtung steht, in der Luft das Filterelement anströmt, erstreckt. Hierdurch kann in unterschiedlichen Lagen eine gezielte Abscheidung unterschiedlicher Verunreinigungen, insbesondere Geruchsstoffe oder reaktiver Spezies, eingestellt werden. Hierdurch kann insbesondere der enormen Anzahl an Möglichkeiten, Nahrungsmittel zuzubereiten Rechnung getragen werden. Einzelne Gerüche können hierbei zuverlässig in den einzelnen Lagen des Filterelementes adsorbiert werden. Vorzugsweise ist die Zusammensetzung des Filtermaterials von zumindest zwei Lagen, vorzugsweise zwei benachbarten Lagen, unterschiedlich zueinander. Hierdurch wird zum einen das gezielte Adsorbieren durch die in der jeweiligen Lage vorhandene Zusammensetzung des Filtermaterials gewährleistet. Zudem können durch die Trennung der unterschiedlichen Zusammensetzungen des Filtermaterials in unterschiedlichen Lagen auch unerwünschte konkurrierende Adsorptions- und Desorptionsvorgänge und andere Konkurrenzreaktionen verhindert werden, durch die beispielsweise Gerüche wieder aus dem Filtermaterial verdrängt werden und freigesetzt werden könnten.

Ist das Filtermaterial in Lagen in dem Filterelement vorgesehen, so kann erfindungsgemäß in einer Lage beispielsweise ausschließlich Aktivkohle und in einer weiteren Lage ausschließlich ein oder mehrere verschiedene mineralische Adsorber als Filtermaterial verwendet werden. Es ist aber auch möglich in einer Lage eine Mischung von Aktivkohle mit dem mineralischen Adsorber zu verwenden oder eine mit der jeweils anderen Komponente versetzte Komponente zu verwenden.

Liegt das Filtermaterial zumindest teilweise als Formkörper vor, können Formkörper unterschiedlicher Zusammensetzung als Lagen des Filterelementes verwendet werden. Hierdurch kann insbesondere ein Vermischen der Zusammensetzungen der einzelnen Lagen miteinander verhindert werden.

Ist das Filtermaterial in dem Filterelement in Lagen vorgesehen, so stellt das Filterelement somit einen mehrlagigen Filter dar. Das Filterelement kann beispielsweise aus drei Lagen bestehen. In der ersten Lage kann beispielsweise eventuell noch in dem Luftstrom vorhandener Wasserdampf gebunden werden, in einer zweiten Lage können beispielweise Kohlenwasserstoffe und in der letzten Lage extrem leichtflüchtige Substanzen, wie beispielsweise Amine, oder feinere Partikel gebunden werden. Durch eine solche sequentielle Adsorption von ansonsten miteinander konkurrierenden Substanzen, die bei dieser Ausführungsform des erfindungsgemäßen Filterelementes realisiert werden kann, kann so die Rückhaltefunktion des Filterelementes insgesamt verbessert werden. Insbesondere kann ein frühzeitiges Zusetzen des Filterelementes verhindert werden. Somit kann die Standzeit des Filterelementes erhöht werden.

Gemäß einer Ausführungsform wird das Filtermaterial in einem Trägerrahmen gehalten. Hierbei kann bei einem lagenförmigen Aufbau des Filterelementes für alle Lagen des Filterelementes ein einziger Rahmen verwendet werden. Es ist bei dieser Ausführungsform aber auch möglich, dass jede der Lagen des Filterelementes in einem gesonderten Rahmen gehalten wird. Ist für das Filterelement nur ein Trägerrahmen vorgesehen, so kann zur Trennung der einzelnen Lagen voneinander beispielsweise jeweils ein Gitter oder eine andere Trennvorrichtung verwendet werden. Bei einem mehrlagigen Filterelement aber auch bei einem Filterelement, in dem nur eine Lage von Filtermaterial vorgesehen ist, wird durch einen Trägerrahmen dem Filterelement eine Stabilität verliehen, die den Einbau in einer Dunstabzugshaube oder einer einer Dunstabzugshaube zugeordneten Luftaufbereitungsvorrichtung erlaubt. Eine Beschädigung des Filtermaterials kann dabei verhindert werden. Insbesondere bei einem körnigen oder granulatförmigen Filtermaterial kann durch den Trägerrahmen zudem das Herausfallen oder anderweitiges Entweichen von Filtermaterial aus dem Filterelement verhindert werden. Ist der Trägerrahmen als umlaufender Rahmen ausgestaltet, so kann dieser beispielsweise Deckschichten halten, zwischen denen Filtermaterial in dem Filterelement angeordnet ist.

Erfindungsgemäß ist es auch möglich das Filtermaterial in oder auf ein Trägermaterial ein- beziehungsweise aufzubringen. In diesem Fall kann das mit dem Filtermaterial versehene Trägermaterial in einem Trägerrahmen gehalten werden, der dann dem in der Regel flexiblen Trägermaterial eine gewisse Stabilität verleiht.

Gemäß einem weiteren Aspekt betrifft die Erfindung eine Dunstabzugsvorrichtung, insbesondere eine Dunstabzugsvorrichtung mit einer Dunstabzugshaube, wobei die Dunstabzugsvorrichtung zumindest ein Filterelement aufweist. Die Dunstabzugsvorrichtung ist dadurch gekennzeichnet, dass das Filterelement ein erfindungsgemäßes Filterelement darstellt.

Dunstabzugsvorrichtungen mit Dunstabzugshaube werden insbesondere zum Absaugen und Reinigen von Dünsten und Wrasen verwendet, die beim Kochen entstehen. Die Dunstabzugshaube ist hierbei oberhalb des Kochfeldes angeordnet. An dieser Einbauposition kommt es während des Kochvorgangs zum Teil zu hohen Temperaturen und bei einigen Kochvorgängen sogar zu einem Flammeneintritt in die Dunstabzugshaube. Durch das erfindungsgemäß verwendete Filtermaterial in Form von zumindest einem mineralischen Adsorber und Aktivkohle ist aber die Gefahr des Entzündens des Filtermaterials geringer, da die mineralischen Adsorber nicht oder nur schwer brennbar sind. Das erfindungsgemäße Filterelement stellt in der erfindungsgemäßen Dunstabzugsvorrichtung vorzugsweise den Geruchsfilter dar. Dieser kann in der Dunstabzugshaube oder nach der Dunstabzugshaube angeordnet sein. Weiterhin kann das Filterelement in Strömungsrichtung der die Dunstabzugshaube durchströmenden Luft vor und/oder nach dem Gebläse der Dunstabzugshaube in der Dunstabzugshaube angeordnet sein. Eine solche Anordnung ist bei dem erfindungsgemäßen Filterelement möglich, da durch die Zusammensetzung des Filtermaterials aus mineralischem Adsorber oder mineralischen Adsorbern und Aktivkohle ein Zusetzen des Filters gezielt verhindert werden kann, indem die Abscheidung in dem Filterelement verteilt erfolgt. Zudem sind mineralische Adsorber aufgrund ihrer natürlichen Porosität luftdurchlässig, so dass auch eine extrem erhöhte Lüfterleistung bei einer Anordnung vor dem Gebläse der Dunstabzugshaube nicht erforderlich ist.

Gemäß einer Ausführungsform weist die Dunstabzugsvorrichtung eine Luftaufbereitungsvorrichtung auf, in der das Filterelement vorgesehen ist.

Als Luftaufbereitungsvorrichtung wird hierbei eine Vorrichtung bezeichnet, die zumindest eine Aktivierungsvorrichtung aufweist, mittels derer der zu reinigende Luftstrom mit hohen Energien behandelt werden kann. Hierzu können beispielsweise Plasmaquellen verwendet werden. Bei einer solchen Aufbereitung von Luft kommt es neben oder während der Ionisation und / oder Dissoziation auch zur Bildung von reaktiven Spezies, wie beispielsweise Ozon. Wird ein Filterelement gemäß der vorliegenden Erfindung eingesetzt und insbesondere an der Luftaufbereitungsvorrichtung vorgesehen, so können neben den Geruchsstoffen auch diese reaktiven Spezies zuverlässig ausgefiltert werden. Hierzu kann die gefundene Eigenschaft mineralischer Adsorber und insbesondere von Schichtsilikaten genutzt werden, dass diese für das Anbinden der reaktiven Spezies geeignet sind.

Indem das erfindungsgemäße Filterelement an der Luftaufbereitungsvorrichtung vorgesehen ist, kann ein gezieltes Ausfiltern von noch in dem Luftstrom enthaltenen Geruchstoffen und / oder reaktiven Spezies gewährleistet werden.

Es liegt allerdings auch im Rahmen der vorliegenden Erfindung, dass das erfindungsgemäße Filterelement in oder an der Dunstabzugshaube beispielsweise unmittelbar nach dem Gebläse der Dunstabzugshaube eingesetzt wird. In diesem Fall, in dem keine gesonderte Luftaufbereitungsvorrichtung vorgesehen ist, dient das Filterelement dann lediglich zum Ausfiltern von Geruchsstoffen.

Ist eine Luftaufbereitungsvorrichtung vorgesehen, so ist diese bei der erfindungsgemäßen Dunstabzugsvorrichtung vorzugsweise so angeordnet, dass diese einem Fettfilter der Dunstabzugshaube in Strömungsrichtung der Luft nachgeschaltet ist. Dies bedeutet, dass die in die Luftaufbereitungsvorrichtung eintretende Luft im Wesentlichen von festen Verunreinigungen, insbesondere Schwebteilchen, und auch flüssigen Verunreinigungen, wie Wasser- und Fetttropfen, bereits befreit ist. Hierdurch kann ein Zusetzen des erfindungsgemäßen Filterelementes mit diesen Verunreinigungen verhindert werden. Gemäß einer bevorzugten Ausführungsform ist die Luftaufbereitungsvorrichtung so angeordnet, dass diese nicht nur dem Fettfilter der Dunstabzugshaube sondern auch dem Gebläse der Dunstabzugshaube in Strömungsrichtung der Luft und besonders bevorzugt der Dunstabzugshaube insgesamt in Strömungsrichtung nachgeschaltet ist. Durch diese Anordnung der Luftaufbereitungsvorrichtung kann eine notwendige Steigerung der Leistung des Gebläses vermieden.

Die Luftaufbereitungsvorrichtung kann in der Dunstabzugshaube integriert sein. Beispielsweise kann die Luftaufbereitungsvorrichtung in einer Verkleidung oder Verblendung der Dunstabzugshaube, wie beispielsweise einem Kanal oder Kamin, angeordnet sein.

Gemäß einer Ausführungsform ist die Luftaufbereitungsvorrichtung zu der Dunstabzugshaube separat angeordnet und mit der Dunstabzugshaube über eine Luftleitung verbunden. Durch eine separate Anordnung der Luftaufbereitungsvorrichtung kann eine Reihe von Vorteilen erzielt werden. Zum einen ist die Luftaufbereitungsvorrichtung bei dieser Anordnung für den Benutzer zugänglich ohne eine Verkleidung oder andere Teile der Dunstabzugshaube entfernen zu müssen. Diese Zugänglichkeit ist beispielsweise zum Wechseln des Filterelementes notwendig.

Vorzugsweise ist in der Luftaufbereitungsvorrichtung ein Luftbehandlungsraum vorgesehen. Dieser Luftbehandlungsraum stellt einen freien, das heißt nicht mit Material gefüllten Raum dar. Hierdurch wird es möglich in dem Raum die für die aktive Luftbehandlung erforderlichen Reaktionen ablaufen zu lassen und eine gute Verteilung der zu behandelnden Luft zu gewährleisten. Zudem kann auch eine gute Durchmischung mit reaktiven Spezies, die zur aktiven Behandlung eventuell erzeugt werden, erfolgen. Diese Vorteile sind bei einem mit Filtermaterial ausgefüllten Luftbehandlungsort nicht möglich.

Der Luftbehandlungsraum ist vorzugsweise zudem zumindest bereichsweise durch zumindest eines der Filterelemente begrenzt. Durch diese Ausgestaltung des Luftbehandlungsraums können zum einen die genannten, durch den freien Raum gegebenen Vorteile erzielt werden. Zudem kann durch das Vorsehen des Filterelementes eine passive Filterung nach oder gleichzeitig mit der aktiven Luftbehandlung erfolgen. Die Luft, die durch die aktive Luftbehandlung bereits zumindest teilweise von Verunreinigungen, insbesondere von Geruchsstoffen, befreit wurde, kann durch das Hindurchtreten durch das Filterelement von noch verbleibenden Verunreinigungen befreit werden. Hierbei können sowohl originäre Verunreinigungen als auch gegebenenfalls reaktive Spezies, die erst bei der aktiven Luftbehandlung erzeugt wurden und noch in der Luft vorhanden sind, entfernt werden. Da das Befreien der Luft von Verunreinigungen insbesondere an der Oberfläche des Filterelementes erfolgt, hat diese Anordnung des Filterelementes weitere Vorteile. Insbesondere, kann die von der verunreinigten Luft angeströmte Filteroberfläche maximiert werden. Diese Maximierung kann insbesondere bei einem Luftbehandlungsraum, der an mehr als einer Seite, vorzugsweise an mindestens zwei Seiten, durch Filterelemente begrenzt ist, erreicht werden. Das Filterelement oder die Filterelemente stellen vorzugsweise die Begrenzungswand oder Begrenzungswände der Luftaufbereitungsvorrichtung zu der Umgebung dar.

Mineralische Adsorber weisen bei dem erfindungsgemäßen Filterelement aber auch zusätzliche Vorteile auf. Durch die Verwendung dieses Filtermaterials kann die Kombination zwischen aktiver und passiver Luftbehandlung nämlich optimiert werden. Insbesondere können die mineralischen Adsorber zum einen katalytisch für die Adsorption von Geruchsstoffen und anderen Verunreinigungen wirken. Weiterhin werden aber durch mineralische Adsorber auch zuverlässig Reaktionsprodukte, insbesondere reaktive Spezies, wie beispielsweise Ozon, aus der Luft, die durch das Filterelement mit mineralischen Adsorbern als Filtermaterial strömt, ausgefiltert. Schließlich sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere über einer Dunstabzugshaube möglich.

Weiterhin können durch die separate Anordnung der Luftaufbereitungsvorrichtung deren Abmessungen unabhängig von der Größe der Dunstabzugshaube gewählt werden. Der Luftbehandlungsraum und damit auch die Größe des Filterelementes kann daher bei dieser Anordnung groß sein und somit kann eine zuverlässige Aufbereitung des Luftstroms gewährleistet werden.

Vorzugsweise stellt die Dunstabzugsvorrichtung eine Umluftvorrichtung dar. Als Umluftvorrichtung wird hierbei eine Vorrichtung bezeichnet, bei der die in der Dunstabzugsvorrichtung behandelte Luft nach der Behandlung und/oder Filterung zumindest teilweise wieder in den Raum geführt wird, in dem die Dunstabzugsvorrichtung betrieben wird. Dieser Raum ist in der Regel eine Küche.

Vorteile und Merkmale, die bezüglich des erfindungsgemäßen Filterelementes beschrieben werden, gelten - soweit anwendbar - entsprechend für die erfindungsgemäße Dunstabzugsvorrichtung und umgekehrt.

Die Erfindung wird im Folgenden erneut unter Bezugnahme auf die beiliegenden Zeichnungen erläutert. Hierbei zeigen:
Figur 1: eine schematische, perspektivische Ansicht einer Ausführungsform der erfindungsgemäßen Dunstabzugsvorrichtung;
Figur 2: eine schematische, perspektivische Schnittansicht einer Ausführungsform einer Luftaufbereitungsvorrichtung der erfindungsgemäßen Dunstabzugsvorrichtung; und
Figur 3: eine schematische Schnittansicht einer Ausführungsform eines erfindungsgemäßen Filterelementes.

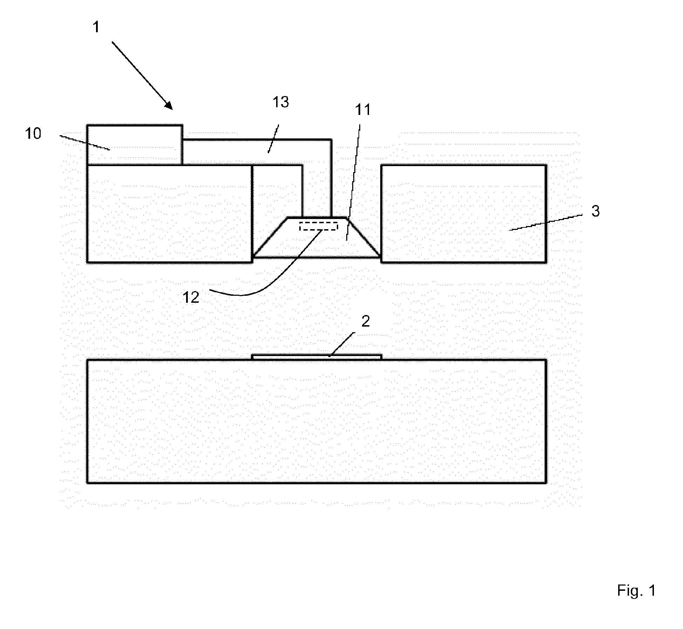

In Figur 1 ist eine Ausführungsform der erfindungsgemäßen Dunstabzugsvorrichtung 1 schematisch gezeigt.

In Figur 1 ist eine schematische Ansicht einer Küchenzeile gezeigt. Ein Kochfeld 2 ist in den Unterschränken der Kochzeile vorgesehen. Oberhalb des Kochfeldes 2, das einen Herd oder dergleichen darstellen kann, ist eine Ausführungsform der erfindungsgemäßen Dunstabzugsvorrichtung 1 gezeigt. Die Dunstabzugsvorrichtung 1 umfasst eine Dunstabzugshaube 11. In der Dunstabzugshaube 11 ist ein Lüfter (nicht gezeigt) vorgesehen, über den Dünste und Wrasen, die von dem Kochfeld 2 aufsteigen, angesaugt werden. In der Dunstabzugshaube 11 werden die Dünste und Wrasen über Filter, insbesondere Fettfilter (nicht gezeigt), von Fett- und Flüssigkeitspartikeln befreit. Von der Dunstabzugshaube 11 erstreckt sich nach oben eine Luftleitung 13 in Form eines Luftrohres. Die in der Dunstabzugshaube 11 vorgereinigte Luft, die immer noch eine gewisse Menge an Verunreinigungen, insbesondere Geruchsstoffe, in sich trägt, wird über die Verrohrung oder Luftleitung 13 zu einer Luftaufbereitungsvorrichtung 10 geleitet. Die Luftaufbereitungsvorrichtung 10 ist in der dargestellten Ausführungsform auf einem Oberschrank 3 der Küchenzeile angeordnet. Die Anordnung der Luftaufbereitungsvorrichtung 10 ist aber nicht auf diese Position beschränkt. Die Luftaufbereitungsvorrichtung 10 kann auch unmittelbar oberhalb der Dunstabzugshaube 11 oder in dem Gehäuse der Dunstabzugshaube 11 vorgesehen sein.

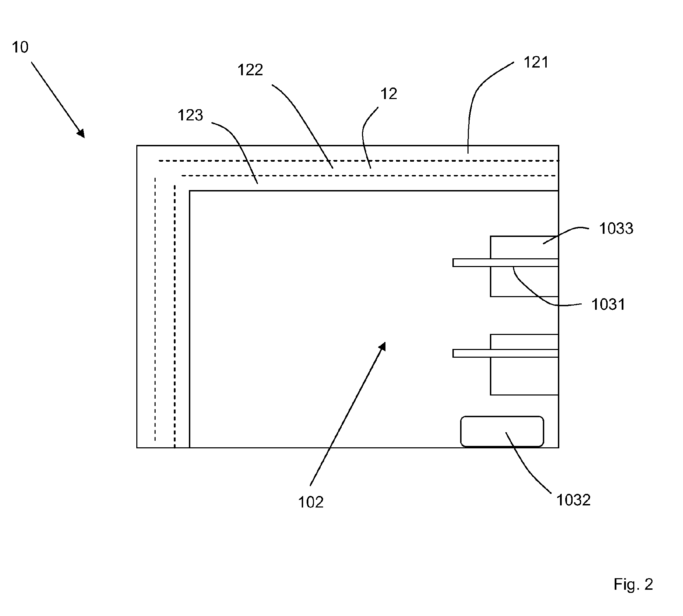

In Figur 2 ist der Innenraum einer Ausführungsform der Luftaufbereitungsvorrichtung 10 einer Ausführungsform der erfindungsgemäßen Dunstabzugsvorrichtung 1 schematisch gezeigt. Die Luftaufbereitungsvorrichtung 10 weist ein kastenförmiges Gehäuse auf. Wie in Figur 2 gezeigt, ist an der Oberseite und Vorderseite der Luftaufbereitungsvorrichtung 10 ein Filterelement 12 vorgesehen. Die Rückseite, der Boden, die Stirnseiten sowie die Oberseite und die Vorderseite des Gehäuses der Luftaufbereitungsvorrichtung 10 begrenzen den Luftbehandlungsraum 102.

Im diesem Luftbehandlungsraum 102, das heißt im Inneren der Luftaufbereitungsvorrichtung 10, sind Aktivierungsvorrichtungen 103 zur aktiven Luftbehandlung angeordnet. In der dargestellten Ausführungsform sind als Aktivierungsvorrichtungen 103 plattenförmige Elektroden 1031 vorgesehen, die zur Erzeugung von Energie mittels dielektrisch behinderten Entladung dienen. Weiterhin ist eine Plasmaquelle 1032 angedeutet, die alternativ oder zusätzlich vorgesehen sein kann. Weiterhin sind in der Figur 2 auch elektronische oder elektrische Bauteile 1033 angedeutet, die in dem Luftbehandlungsraum 102 zum Betrieb der Aktivierungsvorrichtungen 103 vorgesehen sein können.

Wie sich aus Figur 2 ergibt, ist in der dargestellten Ausführungsform an der Vorderseite und der Oberseite des Luftbehandlungsraums 102 ein erfindungsgemäßes Filterelement 12 vorgesehen. Das Filterelement 12 kann einteilig, also L-förmig ausgestaltet sein. Es liegt aber auch im Rahmen der Erfindung an der Oberseite und der Vorderseite ein oder mehrere getrennte Filterelemente 102 vorzusehen. Auch können weitere Seiten der Luftaufbereitungsvorrichtung 1 und insbesondere des Luftbehandlungsraums 102 zumindest teilweise mit einem oder mehreren Filterelementen 12 abgedeckt sein.

In dem Luftbehandlungsraum 102 wird die noch mit Geruchsstoffen und gegebenenfalls weiteren Verunreinigungen beladene Luft, die über die Luftleitung 13 von der Dunstabzugshaube 11 zu der Luftaufbereitungsvorrichtung 10 geleitet wird, behandelt. Hierbei werden zum Teil auch reaktive Spezies, wie Ozon, freigesetzt. Die so nachbehandelte Luft tritt dann über das Filterelement 12 aus der Luftaufbereitungsvorrichtung 10 aus. Hierbei werden in dem Filterelement 12 noch nicht beseitigte Geruchsstoffe und andere Verunreinigungen, wie beispielsweise Feuchtigkeit, ausgefiltert. Da in dem Filterelement 12 als Filtermaterial zumindest teilweise mineralische Adsorber enthalten sind, werden die Geruchsstoffe und andere Verunreinigungen sowie auch gegebenenfalls gebildete reaktive Spezies, die zusammen auch als Substanzen bezeichnet werden, in dem Filterelement 12 zurückgehalten und die Luft kann in gereinigter Form in die Umgebung abgegeben werden. Insbesondere kann die Luft ohne Bedenken in den Raum, in dem die Luftaufbereitungsvorrichtung 10 betrieben wird, im vorliegenden Fall die Küche, abgegeben werden.

Das Filterelement 12 kann, wie in Figur 2 schematisch angedeutet ist, mehrlagig ausgestaltet sein. Hierbei variiert die Zusammensetzung des Filtermaterials bei dem mehrlagigen Aufbau von einer Lage zur anderen. So kann beispielsweise in der Lage 121, die dem Luftbehandlungsraum 102 zugewandt ist, ein Filtermaterial vorgesehen sein, das insbesondere zur Aufnahme von Feuchtigkeit ausgelegt ist. In der weiteren Lage 122 oder den weiteren Lagen 122, 123 kann dann Filtermaterial verwendet werden, das insbesondere zur Aufnahme von Geruchsstoffen geeignet ist. Auch bei dieser mehrlagigen Ausgestaltung ist in zumindest einer, vorzugsweise aber in allen Lagen als Filtermaterial zumindest teilweise ein mineralischer Adsorber vorgesehen.

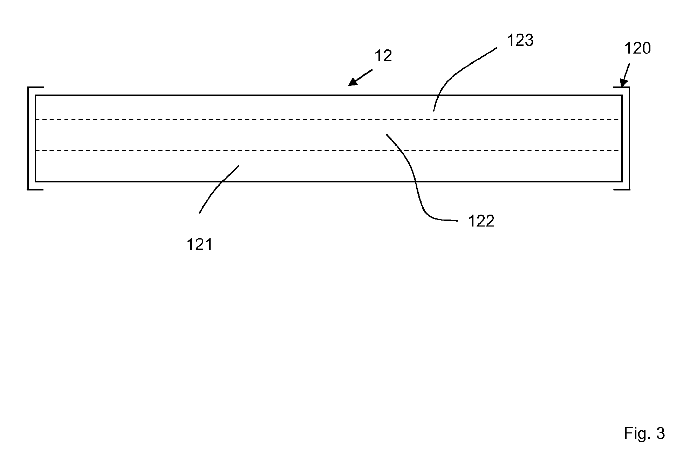

In Figur 3 ist schließlich eine schematische Schnittansicht einer weiteren Ausführungsform eines erfindungsgemäßen Filterelementes 12 gezeigt. Bei dieser Ausführungsform stellt das Filterelement 12 ein flächiges Filterelement 12, dar, in dem drei Lagen 121, 122, 123 oder Schichten von Filtermaterial vorgesehen sind. Diese Lagen 121, 122, 123 sind in der dargestellten Ausführungsform in einem Trägerrahmen 120 gehalten, der einen umlaufenden Rahmen darstellen kann. Ein solches flächiges Filterelement 12 kann beispielsweise, wie in Figur 1 angedeutet, in der Dunstabzugshaube 11 der Dunstabzugsvorrichtung 1 angeordnet sein. In diesem Fall kann die Dunstabzugsvorrichtung 1 auch ohne die dargestellte Luftaufbereitungsvorrichtung 10 ausgestaltet sein.

Erfindungsgemäß werden speziell an das breitbandige Anwendungsspektrum der Dunstabzugshauben angepasste mineralische Adsorber, beispielsweise smektitreiche Tonerden, Bentonite oder Halloysite, als Zusatz zur Aktivkohle verwendet. Die Aktivkohle und der mineralische Adsorber, der auch als Mineralabsorber bezeichnet wird, können beispielsweise in Granulatform zu bestimmten Anteilen miteinander vermischt werden. Erfindungsgemäß ist es möglich, dass die Vermischung der beiden oder mehreren Ausgangskomponenten vor deren weiteren Verarbeitung, beispielsweise durch Extrusion, erfolgt. Das Filtermaterial kann anschließend in einen Trägerrahmen eingebettet werden.

Die Erfindung weist eine Reihe von Vorteilen auf. Insbesondere kann durch geeignete Wahl des mineralischen Adsorbers eine Verbesserung hinsichtlich der Geruchsbeseitigung erzielt werden, speziell im Hinblick auf durch übliche Aktivkohlefilter schlecht gebundene Stoffe. Somit kann bei dem erfindungsgemäßen Filterelement ein gezielter Ausgleich der Schwächen der Aktivkohle durch den Einsatz optimierter mineralischer Adsorber erfolgen. Weiterhin ist auch eine Erhöhung der Filterstandzeit mit dem erfindungsgemäßen Filterelement möglich. Die Sicherheit der Luftreinigungsvorrichtung kann zudem insgesamt erhöht werden. Durch eine Kombination von Aktivkohle und mineralischem Adsorber / mineralischen Adsorbern können eventuell auftretende Synergieeffekte genutzt werden.

### Bezugszeichenliste

- 1: Dunstabzugsvorrichtung
- 10: Luftaufbereitungsvorrichtung
- 102: Luftbehandlungsraum
- 103: Aktivierungsvorrichtung
- 1031: Elektrode
- 1032: Plasmaquelle
- 1033: elektrische/elektronische Bauteile
- 11: Dunstabzugshaube
- 12: Filterelement
- 120: Trägerrahmen
- 121: Lage
- 122: Lage
- 123: Lage
- 13: Luftleitung

- 2: Kochfeld
- 3: Oberschrank

## Patentansprüche

1. Filterelement für eine Dunstabzugsvorrichtung (1), insbesondere eine Dunstabzugsvorrichtung (1) mit einer Dunstabzugshaube (11), wobei das Filterelement (12) Filtermaterial zur Aufnahme von Substanzen aus einem das Filterelement (12) anströmenden Luftstrom aufweist, **dadurch gekennzeichnet, dass** das Filtermaterial teilweise aus zumindest einem mineralischen Adsorber besteht, der zumindest teilweise aus einem Schichtsilikat besteht, und das Filtermaterial weiterhin Aktivkohle umfasst.

2. Filterelement nach Anspruch 1, **dadurch gekennzeichnet, dass** der mineralische Adsorber smektithaltige Tonerde, Bentonit oder Halloysit darstellt.

3. Filterelement nach einem der Ansprüche 1 oder 2, **dadurch gekennzeichnet, dass** der mineralische Adsorber eine Granulatform aufweist.

4. Filterelement nach einem der Ansprüche 1 bis 3, **dadurch gekennzeichnet, dass** das Filterelement (12) einen Formkörper aus zumindest einem Teil des Filtermaterials, insbesondere einen Extrusionsformkörper, umfasst.

5. Filterelement nach einem der Ansprüche 1 bis 4, **dadurch gekennzeichnet, dass** die Aktivkohle mit dem mineralische Adsorber versetzt ist oder der mineralische Adsorber mit der Aktivkohle versetzt ist.

6. Filterelement nach einem der Ansprüche 1 bis 5, **dadurch gekennzeichnet, dass** das Filtermaterial in Lagen (121, 122, 123) in dem Filterelement (12) vorliegt, wobei die Zusammensetzung des Filtermaterials von zumindest zwei Lagen (121, 122, 123) unterschiedlich zueinander ist.

7. Filterelement nach einem der Ansprüche 1 bis 6, **dadurch gekennzeichnet, dass** das Filtermaterial in einem Trägerrahmen (120) gehalten wird.

8. Dunstabzugsvorrichtung, die zumindest ein Filterelement (12) aufweist, **dadurch gekennzeichnet, dass** das Filterelement (12) ein Filterelement (12) gemäß einem der Ansprüche 1 bis 7 darstellt.

9. Dunstabzugsvorrichtung nach Anspruch 8, **dadurch gekennzeichnet, dass** diese eine Luftaufbereitungsvorrichtung (10) aufweist, in der das Filterelement (12) vorgesehen ist.

10. Dunstabzugsvorrichtung nach Anspruch 9, **dadurch gekennzeichnet, dass** die Dunstabzugsvorrichtung (1) eine Dunstabzugshaube (11) aufweist und die Luftaufbereitungsvorrichtung (10) zu der Dunstabzugshaube (11) der Dunstabzugsvorrichtung (1) getrennt angeordnet und in Strömungsrichtung nach der Dunstabzugshaube (11) angeordnet ist.
